# EUROPEAN PATENT APPLICATION

(11) **EP 1 571 889 A1**
(43) Date of publication of application: **07.09.2005**
(21) Application number: 04100842.6
(22) Date of filing: 03.03.2004
(51) Int. Cl.: H05B 6/12

(54) **Cooking hob with contactless multi-purpose device**

(71) Applicant: Electrolux Home Products Corporation N.V., 1930 Zaventem (BE)
(72) Inventor: Arrigoni, Giancarlo, IT-33100, Udine (IT); Muzzolini, Dario, IT-33010, Magnano in Riviera (IT)
(74) Representative: Giugni, Valter

(57) **Abstract**

The present invention relates to a glass-ceramic cooking hob with a first ferromagnetic elements placed under said hob, a first coil wrapped around said first element, an oscillating circuit connected to said first coil, a second ferromagnetic element movable over the hob, a second coil wrapped on said second ferromagnetic element; the devices are so arranged and sized so that it is possible to transfer electromagnetic energy from below the cooking hob to an electric load above it without any need to make an hole through the glass-ceramic hob.-

## Description

The invention refers to a improved kind of cooking hob provided with an accessory device able to tap an electromagnetic energy field, and to supply said energy under different forms to several electric loads placed over said cooking hob, said device being fully contactless.

Different types of cooking hobs are kown, based on a rigid top of insulating material, typically glass-ceramic, whereon the containers with the food to be cooked or treated are laid.

The common feature of said cooking hobs is that they are consisting of a rigid horzontal and continuous plate through which the energy is tranferred, from an energy source of various type and nature placed below it, to the space above it.

The thermal source can be, for example, one or more gas-fires, or some electric heating resistors adequately sized and positioned; with respect to the instant invention, induction hobs also can be used, even if it is not strictly correct to considered them as featuring a thermal energy production under the cooking plate, as the produced heat is generated in the same metallic body of the respective containers laid over the same cooking plate.-

Generally speaking said hobs are especially appreciated as they show a fully flat and smooth surface and so very apparently allow a quick and accurate cleanability of their top surface, as they show no uneveness or holes towards the below energy source, apart apparent aesthetic benefits.-

In the normal use of this cooking hobs it is often useful of placing, close to the same hobs and above them, some electric devices, that in different ways can be helping to improve and make easier the food treatment; these utilizations can comprise, for instance, a lamp to closely illuminate what inside the cooking containers, or thermometric means able to measuring the temperature inside said containers, as probes or Infrar-red detectors, or different accessories as electric blenders to be placed over said food containers, or even small fans able to make easier the dragging away and upwards of the odours and the vapours, etc.-

These opportunities however cannot be easy implemented with devices that, even if laid over the cooking hob, have to be supplied by specific electric conductors accessible from outside the hob, as these would require complicate and unsafe loose connections, and cumbersome installations in the neighbouring kitchen elements.-

Furthermore the installations of electric plugs over the same cooking plate would require the drilling of it, which, even if assisted by suitable gaskets, would obviously soon miss the cited benefits of safety and cleanliness featured by the glass-ceramic cooking hob.-

It would therefore be desirable, and is actually a main purpose of the present invention, to provide a cooking plate whose plate is made of glass- ceramic or in any insulating material, that be able to avoid said problems and then that is able to draw an electric power from the same plate, without drilling or in any way to alter the same top surface.-

A further purpose of this invention is to re-establish in a very quick way the flatness and smoothness of the same plate, turning it fully similar to a cooking hob known in the art.-

Said cooking hob has to be easily manufactured with the existing technologies and competitive in its construction, and finally it must not show any degradation in the safety or any reduction in its operation and reliability.-

According with the present invention, this aim is reached, along with further ones that will be apparent from the following description, in a cooking hob incorporating the features as recited in the appended claims.-

Anyway, features and advantages of the present invention will be more readily understood from the description that is given below by way of nonlimiting example with reference to the accompanying drawings, in which:
- fig. 1 shows a symbolic vertical and front section view of a typical embodiment of the invention,
- fig. 2 shows a perspective view of two corresponding devices of an hob according to the invention,
- fig. 2A shows a front section view of the lower device in fig. 2, with a further coil 4 wrapped on it,
- figures 3, 4,, 5 and 6 show different but typical possible embodiment of an hob according to the invention,
- fig. 7 illustrates an example of an electronic circuit that can be comprised in an hob according to the invention,
- fig. 7A illustrates the schematic block diagram of the circuit shown in fig. 7,
- fig. 8 illustrates an example of an electronic circuit that is matched with the circuit in fig. 7,
- fig. 8A illustrates the schematic block diagram of the circuit shown in fig. 8,
- fig. 9 represents a symbolic perspective view of two components that are intended to correspondly work in an hob according to the invention,
- fig. 10 shows a vertical and median section view of the lower component of fig. 9.-

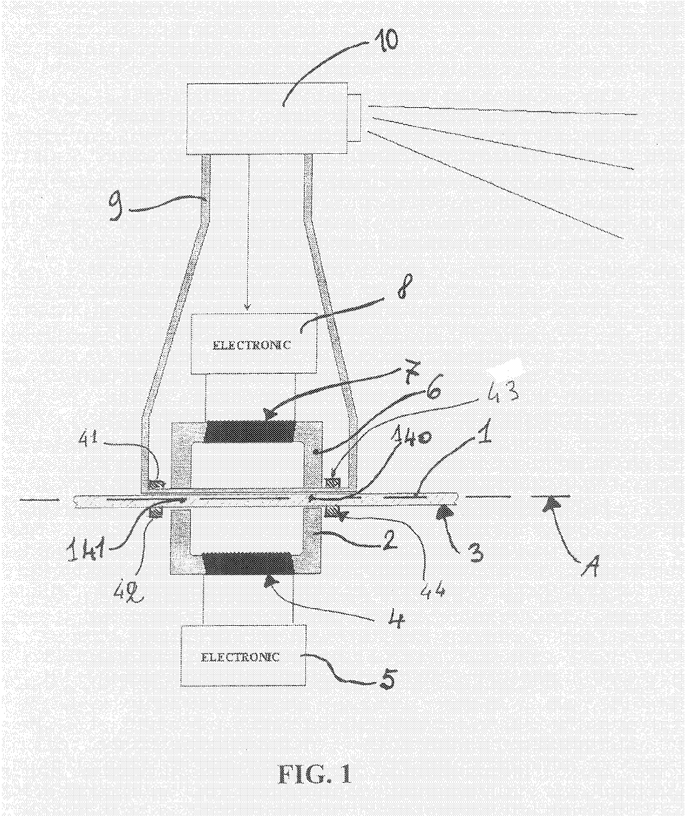

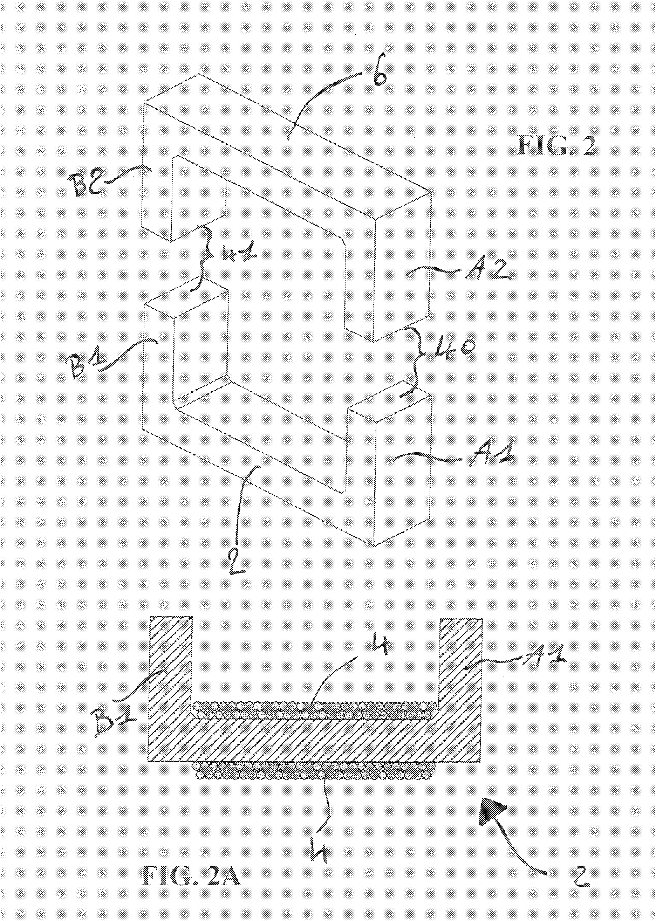

With reference to the figures, and particularly too figures 1 and 2, a cooking hob according to the invention comprises:
- a glass-ceramic hob 1 forming really the cooking plate,
- a first ferromagnetic element 2, typically made of ferrite, solidly placed on the bottom surface 3 of this cooking plate, in a suitable position that can be selected at will,
- a first electric coil 4 wrapping with a plurality of turns said ferromagnetic element 2,
- an oscillating circuit 5 able to supply said coil with an alternating voltage at a pre-defined frequency,
- a second ferromagnetic element 6, typically made in ferrite too, simply laid over said plate 1 and positioned exactly on the vertical line of said first ferromagnetic element 2,
- a second electric coil 7 wrapping with a corresponding plurality of turns said second ferromagnetic element 6,
- an electric load 8 connected to both terminals of said second magnetic coil 7.- Said two ferromagnetic elements 2 and 6 are formed preferably as a "U" and are positioned in a basically symmetrical way to the median inner plane "A" of said plate 1, and the flat end surfaces of the respective branches A1, A2, B1, B2 are adhering to the corresponding sides of said plate 1.-

Furthermore said coils 4 and 7 are preferably wrapped on the portions of said respective ferromagnetic elements, that are parallel to said plate 1, as shown in the figures.-

Therefore it will be soon apparent that said two element 2 and 6, together taken, do realize a unique magnetic circuit interrupted by two air gaps 140, 141, (see figures 1, 2) due to the plate thickness, in correspondence to the couples of the facing branches , respectively A1, A2 and B1, B2 of said ferromagnetic elements (see fig. 2 and 2A).-Therefore said two ferromagnetic elements 2 and 6 and said two coils 4 and 7 do form an electric transformer wherein the secondary circuit, consisting of the coil 8, is connected to a (user) load 8, that can also be an electronic circuit to which a general user circuit 10 can be connected (see fig. 1).-

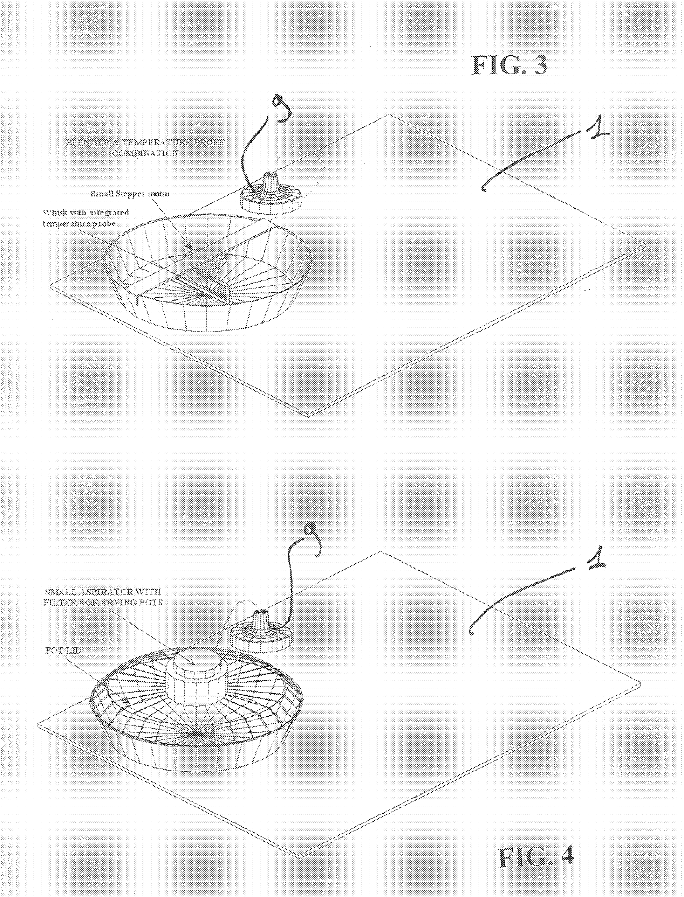

Said user circuit 10 may be any electric useful appliance, for example a lamp, or a food blender, etc., as symbolically represented in figures 3, 4, 5, 6.-

Advantageously, all the described elements that are placed above said plate 1 can be collected in only one accessory 9, as schematically represented.-

Obviously the man skilled in the art could soon observe that the best efficiency in the energy transferring can be obtained with a specific working frequency, and the several sizes and functional characteristics of the used materials and components have to be such so that the above described circuit must operate at the resonating frequency, or at a frequency very close to it.-

Therefore said oscillating circuit 5 must be carefully designed in order to supply the power requested at said resonating frequency, but said design features are perfectly known to the man skilled in the art.-

As a matter of facts, the technology regarding the contactless transfer of electric power is well known in the art; reference is here mate to:
- IEEE TRANSACTION ON INDUSTRIY APPLICATIONS, VOL. 38, NO. 5, SEPTEMBER/OCTOBER 2002,
- PRODUCT CATALOG of the Company PAUL VAHLE GMBH & CO.KG
- D 59172 KAMEN/GERMANY, www.vahle.de relevant to the products identified as: CONTACTESS POWER SYSTEM.-

So implemented, the cooking hob according to the invention can be installed, connected and put into operation; in the fact for its working it will be enough to put down the accessory 9 on said plate 1, so that the couples of the branches A1, A2 and B1, B2 be faced up each other, so that they close, within well apparent limitation, the resulting magnetic resonant circuit.-

When the oscillating circuit 5 is energized, an energy portion is soon transmitted to the secondary circuit, that is to the second coil 7, and therefrom to the load 8, to the subsequent use as required.-

It will be then apparent the simplicity of the operation of the cooking hob according to the invention; in the facts it will be enough to lay the accessory 9, comprising the second coil 7 and the load 8, on the top surface of the plate 1 that said accessory 9 and the load 8 will be immediately energized in an automatic way without further operation.-

To make easier the positioning of said accessory 9 exactly where required, it will only suffice to draw on the plate surface, and with any kind of means, the outline of the exact point or area where it must be placed.-

Inversely, when it is wished to take away said accessory to clear again the plate surface, the only requested operation is to move it away, without any further operation.-

In the fact said accessory is held into position only by gravity, and the just electromagnetic linkage throughout the plate 1 will allow to preserve it integral and specifically without any processing or, even worse, without any through drilling.

Moreover the correct positioning of said accessory 9 could take advantage from the improvement that on the bottom surface on it, and to the bottom surface 3 of said plate 1, a plurality of couples of reciprocally attracting magnetic elements 41, 42 and 43, 44 are installed; said magnetic elements are so sized and positioned that, when the magnetic elements 41, 42, and 43, 44 mounted on said accessory are placed in the respective better attraction position, then the electro-magnetic matching of said ferromagnetic elements 2 and 6 is also optimizied.-

This improvement will then help the automatic correct placing of said accessory 9 without being obliged to select the precise place where to move it, as the attraction force of said magnetic elements will soon advise when the correct position has been reached.-

However it would be desirable avoiding the need to lay said accessory 9 with a fixed and predefined orientation in order to correctly match with the first ferromagnetic element under it; to this purpose it is an useful improvement of this invention to provide a first and a second ferromagnetic elements that can be correctly matched indipendently of their reciprocal orientation.-

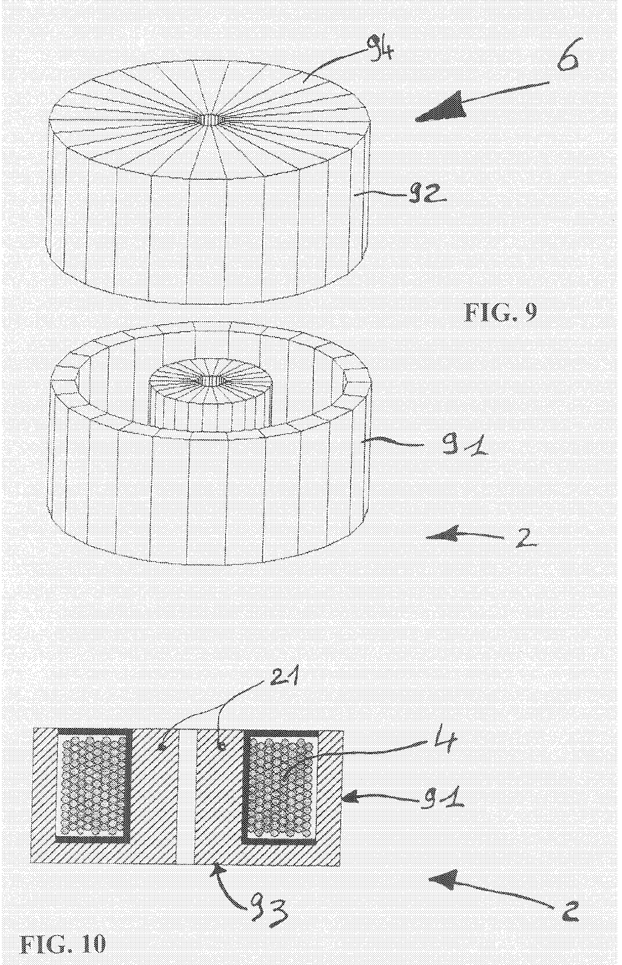

To this purpose it was considered and proposed that said ferromagnetic elements are made with a cylindrical shape, as shown in fig. 9; their magnetic circuit_is implemented by the external cylindrical wall respectively 91, 92 connected by respective flat base 93, 94 to a respective central branch 21 (and not shown for the element 6); the coils 4, 7 are then wrapped within the respective cylindrical elements and around said respective central branches.-

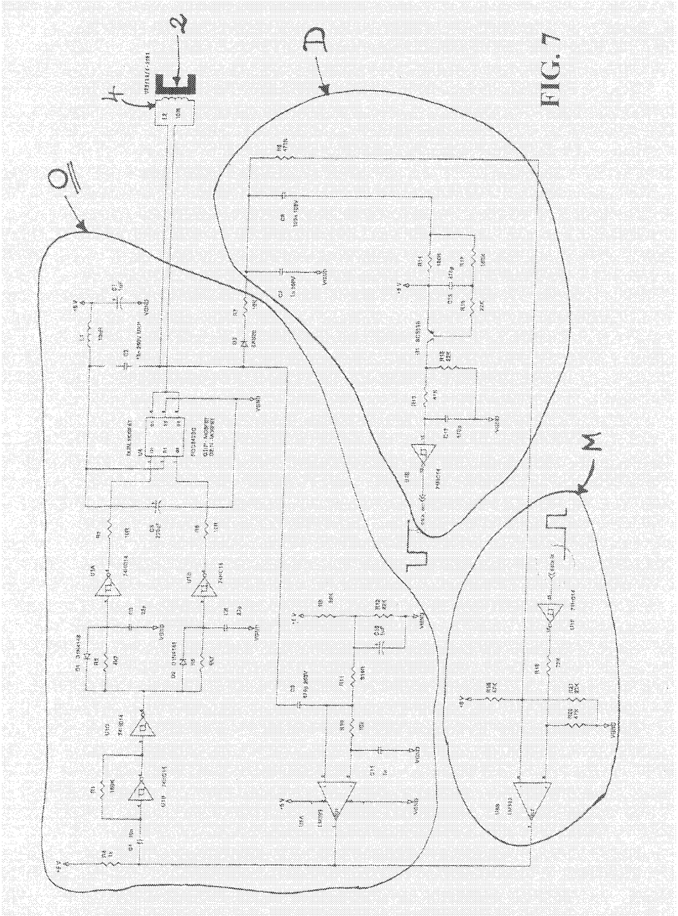

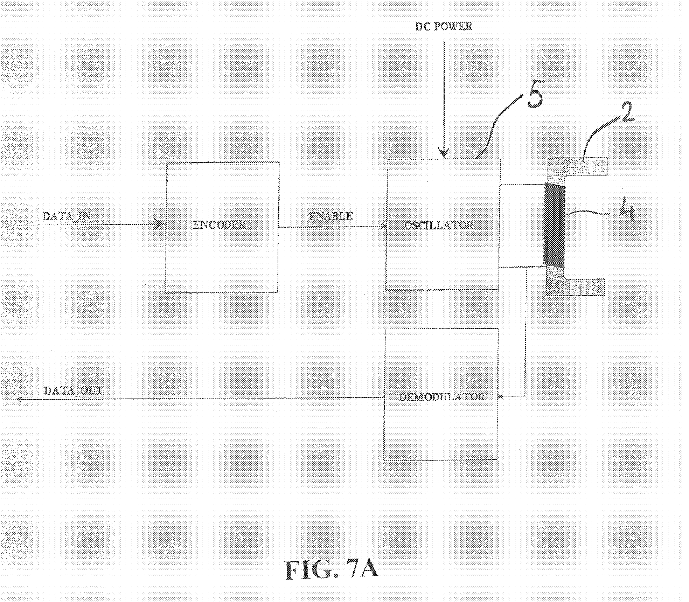

The described invention allows an advantageous improvement through an extension of its working functioning: in the facts it is here considered the oscillating circuit connected to said transformer, and composed by the elementary circuits and by the components comprised inside the closed line named "O" in fig. 7; to this oscillating circuit are now usefully associated both a modulator circuit, comprised inside the closed line named "M", and a demodulator circuit, comprised inside the closed line named "D".

Said circuits, and the relevant way of working, are generally fully known in the technique, and have been represented in a detailed way only in order to offer an example of a preferred and not limiting embodiment; therefore, being not part of the instant invention, will not be further discussed.-

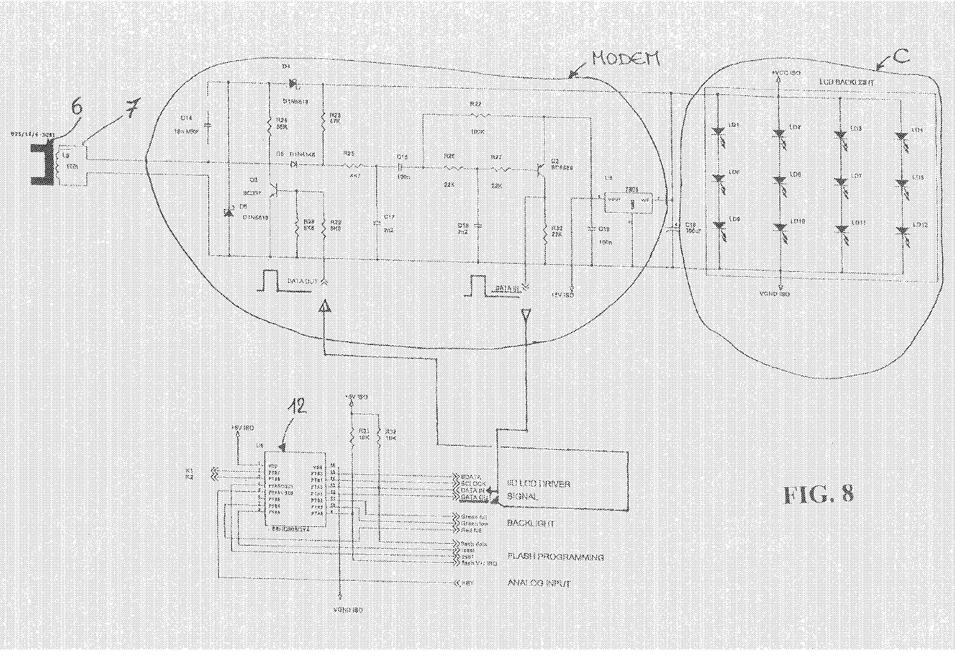

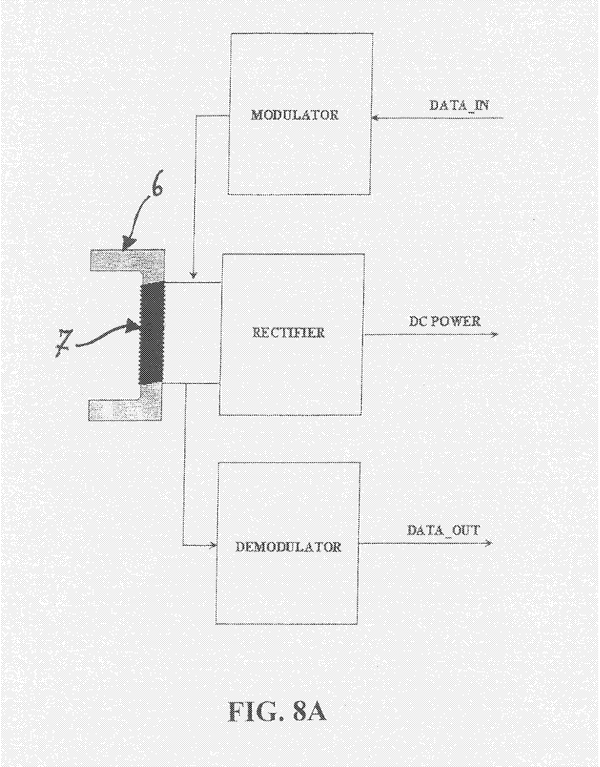

With reference to the fig. 8 , on said second coil 7 it is placed, over the circuit of the load 8 exemplified by a battery of lamps LCD comprised inside the closed line named "C", even a circuit that basically is able to demodulate an electric signal there present and transferred by said transformer; said circuit is also able to modulate, according to a special signal for instance detected by suitable sensors, the frequency present and send to said load "C"

Said circuit works then as a modulating and demodulating, that is as a MODEM as it will named in the figures and as it will be referred from now on; it will not further discussed as it is well known in the art.-

The typical operation of the described circuits is as follows: a suitable square wave signal is applied to the terminal "DATA IN" of the modulating circuit "M"; such signal will modulate the oscillating voltage generated by said oscillating circuit in "O" and then it is transferred, passing through said transformer (2, 4, 6, 7), to the circuits in MODEM.-

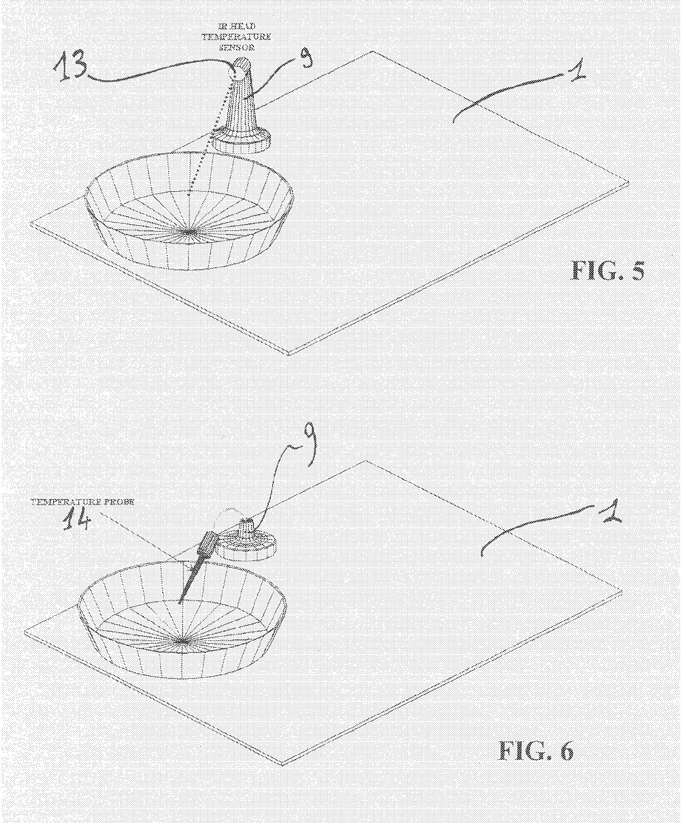

From here a suitable circuit decodes and separates such signal and send it, on a proper connection "DATA IN", to a microprocessor 12 known in the art; such microprocessor may for example activate, through suitable dedicated circuits, an infrared temperature sensor, as symbolically shown in fig. 5.-

This sensor is so arranged to be able to detect the temperature sensed by a respective head 13, that can detect the temperature for instance of a food into said container laid on said cooking plate, or it can be simply detected the temperature of the top surface of the same plate.-

As a further example of possible use it can be supposed that a conventional temperature probe 14, as shown in fig. 6, is immersed inside said container and its signal is decoded by the microprocessor 12, and therefore it is used to modulate (see the circuit: DATA OUT) the oscillating voltage on the load 8 and so on said second coil 7.-

Such a modulation may preferably be a square wave, only partially limiting the amplitude of the oscillating voltage on said load 8 and so on said second coil 7; said small modulation can however be transferred on said first coil 4, and therefrom it is conventionally demodulated from circuit "D", recognized as a square wave having a definite amplitude and frequency and finally used in the preferred way.-

Basically and shortly the presence of the two coils and of the respective ferromagnetic elements allows the transfer of the an electric power usable for a plurality of different purposes, together with a transmission modulated commands and electric signals from one to the other side of the cooking plate, by the sole placement of a simply element that has been generally named accessory 9.-
It is also apparent that, in order to obtain different function over the cooking plate without having to permanently modify it, it will enough to move away a specific type of accessory 9 and substitute, over the same area of said plate 1, a different accessory able to perform the selected requested operation.-

## Claims

1. Cooking hob comprising a flat horizontal plate (1) made of electrically insulating material, **characterized in that** it also comprises:
- a first ferromagnetic element (2) solidly placed under said plate (1),
- a first electric coil (4) wrapped around said first ferromagnetic element (2),
- an oscillating circuit (5) able to provide said first coil (4) with an alternate frequency at a pre-defined frequency,
- a second ferromagnetic element (6), apt to be placed in a movable way over said flat plate (1) exactly on the vertical line passing through said first ferromagnetic element (2),
- a second electric coil (7) wrapped around said second ferromagnetic element (6),
- an electric load (8) connected to the terminals of said second electric coil (7).-

2. Cooking hob according to claim 1, **characterized in that** said two ferromagnetic elements (2, 6) are shaped as a "U" and said second ferromagnetic element can be placed in a substantially symmetrical way with said first ferromagnetic element (2) with regard to the median plane (A) inside said flat plate (1).-

3. Cooking hob according to claims 1 or 2, **characterized in that** each of said two ferromagnetic elements (2, 6) are shaped as a toroid having respective central branches (21, 22) and said two electric coils (4, 6) are placed inside the respective ferromagnetic elements, around said respective central branches (21, 22).-

4. Cooking hob according to claim 1 or 2, **characterized in that** said first ferromagnetic element (2) is placed in contact with the bottom surface (3) of said flat plate (1).-

5. Cooking hob according to any previous claims, **characterized in that** said first ferromagnetic element (4) is associated with a modulating circuit (M)and/or a demodulating circuit (D).-

6. Cooking hob according to claim 5, **characterized in that** a modulating/demodulating circuit (MODEM) is associated to said second electric coil (7).-

7. Cooking hob according any previous claim, **characterized in that** said second ferromagnetic element (6) and said load (8) are able to be integrated into a single accessory means (9) that can be individually placed over said flat plate (1) and that can be removed from it.-

8. Cooking hob according to any previous claim, characterided in that a plurality of couples of reciprocally attracting magnetic elements (41, 42) (43, 44) are placed on the bottom surface of said accessory (9) and to the bottom surface of said plate (1), in a way that when the accessory is so positionat that the magnetic elements of each couple (41, 42) (43, 44) are most attracting, then the the electro-magnetic matching of said ferromagnetic elements (2, 6) is optimized.-

9. Cooking hob according to any previous claim, **characterized in that** the frequency of the voltage supplied by said oscillating (5) circuit to said first and second ferromagnetic elements and to the respective electric coils is the resonating frequency.-
